Europäisches Patentamt

European Patent Office

Office européen des brevets

(11) Publication number: **0 152 356**
**A2**

# (12) EUROPEAN PATENT APPLICATION

(21) Application number: **85400233.4**

(22) Date of filing: **13.02.85**

(51) Int. Cl.⁴: **A 24 C 5/32**
**B 65 G 47/14**

(30) Priority: **14.02.84 JP 24383/84**

(43) Date of publication of application:
**21.08.85 Bulletin 85/34**

(84) Designated Contracting States:
**DE GB IT**

(71) Applicant: **THE JAPAN TOBACCO & SALT PUBLIC CORPORATION**
**2-1, Toranomon 2-chome**
**Minato-ku Tokyo 105(JP)**

(72) Inventor: **Horie, Motonobu**
**4-1-17-401 Takinogawa**
**Kita-Ku Tokyo 114(JP)**

(72) Inventor: **Suzuki, Minoru**
**4-1-22-102 Takinogawa**
**Kita-Ku Tokyo 114(JP)**

(72) Inventor: **Ogura, Shinji**
**5-882-15 Nonoshita**
**Nagareyama-shi Chiba 270-02(JP)**

(74) Representative: **Loriot, Jacques**
**c/o SA. FEDIT-LORIOT 38, avenue Hoche**
**F-75008 Paris(FR)**

(54) **Method and apparatus for feeding bar-like articles at high rate.**

(57) A bar-like article feeding apparatus is disclosed in which bar-like articles are taken out from a container in a continuous line flow and then successively fed into recesses of a recessed rotary drum, the improvement comprising an endless belt which is disposed at the bottom of the container which contains bar-like articles; a substantially horizontal feeding passage which is formed by and between said endless belt and a guide thereabove and a vertical dropping passage which is continuous to said horizontal passage via an arcuate passage and extends to the recessed rotary drum.

F I G. 1

Croydon Printing Company Ltd.

METHOD AND APPARATUS FOR FEEDING 0152356
ARTICLES AT HIGH RATE.

## BACKGROUND OF THE INVENTION

The present invention relates to a method and apparatus for feeding bar-like articles at a high rate, in particular, to a method and apparatus for high rate feeding filter plugs used in a cigarette making machine.

Cigarette producing machines which can be operated at a high speed have recently been developed. Presently machine having a production capacity more than 8000 cigarettes per minute have been demanded. Since filter plugs having a length 4 to 6 times as large as an article which are usually used at product are supplied to the cigarette producing machine, an apparatus which takes out filter plugs from a magazine requires a processing capacity higher than 2000 plugs per minute.

A conventional method of taking out the filter plugs from a magazine comprises providing a passage at the bottom of the magazine; dropping the filter plugs in a line by gravity and successively feeding then into subsequent process. However it is impossible to feed filter plugs at a rate higher than 1700 plugs per minute since the gravity acceleration is constant according to this method.

A forced feeding apparatus using a suction belt or suction roller as is disclosed in the Japanese Patent Application Laid Open No.54-132969 has been proposed for enabling improved high rate feeding. However this approach has disadvantages that a high vacuum and a large amount of air is required to provide an effective transportation capacity and that transportation capacity is decreased due to clogging of suction holes since the filter plug has only one point on the circumference thereof which is in contact with the suction belt and suction roller.

Another approach for feeding filter plugs by means of a high speed belt without using any gravity as is disclosed U.S. Patent No. 3,503,488 has been proposed. According to this method, the filter plugs are necessary to be strongly pressed by a belt when being fed and the filter plugs are in a closed condition each other. Accordingly this method has a disadvantage that the filter plugs are pressed to be deformed at the exit of the transportation path. Distortion of a recticircular section results in trouble in the subsequent process.

## SUMMARY OF THE INVENTION

It is therefore an object of the present invention to provide a method and apparatus in which bar-like articles such as filter plugs are taken out from a magazine at a rate higher than 2000 articles per minute and then fed to a recessed drum in subsequent process without causing deformation of the bar-like articles and clogging of the transportation path.

In an aspect of the present invention there is provided a bar-like article feeding method in which bar-like articles are taken out from a container in a continuous line flow and then successively fed into recesses of a recessed rotary drum, the improvement comprising providing a vertical passage continuous to a feeding passage; successively feeding the bar-like articles along said feeding passage in such a manner that the bar-like articles are in contact with each other; and causing the bar-like articles to reach the recessed rotary drum, said bar-like articles being separated each other by gravity-dropping the bar-like articles along said vertical passage.

In another aspect of the present invention there is provided a bar-like article feeding apparatus in which bar-like articles are taken out from a container in a continuous line flow and then successively fed into recesses of a recessed rotary drum, the improvement comprising an endless belt which is disposed at the bottom of the container which contains bar-like articles; substantially horizontal feeding passage which is formed by and between said endless belt and a guide thereabove; and a vertical dropping passage which is continuous to said horizontal passage via an arcuate passage and extends to the recessed rotary drum.

In further aspect of the present invention, there is provided a bar-like article feeding apparatus in which bar-like articles are taken out from a container in a continuous line flow and then successively fed into recesses of a recessed rotary drum, the improvement comprising an endless belt which is disposed at the bottom of the container which contains bar-like articles; a substantially horizontal feeding passage which is formed by and between said endless belt and a guide thereabove; a vertical dropping passage which is continuous to said horizontal passage via an arcuate passage and extends to the recessed rotary drum; an air nozzle which is disposed in close proximity with the outer periphery of the recessed drum at the lower end of the vertical dropping passage; and inclined surfaces on the outer periphery between the recesses of the recessed
rotary drum, said inclined surfaces being linearly inclined
towards a rear recess.

Since the present invention has the afore-mentioned
structure, the present invention has features that bar-like
articles such as filter plug and the like can be taken out
from a container at a high rate and the bar-like articles
can be fed to a recessed rotary drum without causing deformation of the article and clogging of the transporting path.

## BRIEF DESCRIPTION OF THE DRAWINGS

The present invention will be described by way of an
embodiment with reference to the drawings in which:

Fig. 1 is an explanatory view showing an embodiment
of the present invention; and

Fig. 2 is an explanatory view showing another embodiment of the present invention.

## DETAILED DESCRIPTION OF THE PREFERRED EMBODIMENTS

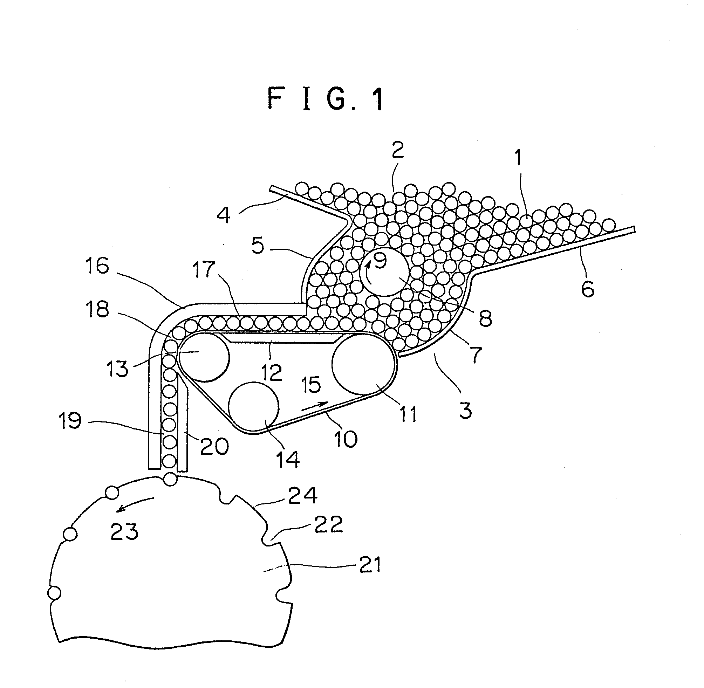

Referring now to Fig. 1, there is shown an apparatus
of the present invention which is provided under a magazine
2 in which a multiplicity of filter plugs 1 are contained.

Adjacent to the lower part of the magazine 2, there
is provided a small chamber 3 in which a small number of
(50 to 60) filter plugs are contained. An arcuate plate 5
forming a left side wall of the small chamber 3 is integral with the plate 4 which forms a left side bottom of the magazine. Similarly an arcuate plate 7 forming a right side wall of the small chamber 3 is integral with a plate 6 which forms the right side bottom of the magazine 2.

A roller 8 is provided substantially midmost the small chamber 3 and is adapted to be rotated in a direction as shown by an arrow 9. An endless belt 10 is provided at the bottom of the small chamber 3 and is adapted to move around a drive roller 11, a guide 12 and rollers 13 and 14 in a direction as shown by an arrow 15. The endless belt 10 is substantially horizontally disposed between the drive roller 11 and the roller 13 and has a horizontal portion supported by the guide 12.

A guide 16 is provided above the endless belt 10. A horizontal passage 17 along which a line of the filter plugs 1 are guided and successively transported from the small chamber 3 is defined. The guide 16 includes an arcuate passage 18 having an arc of 90° concentrical with the roller 13 following the horizontal part.

The guide 16 includes a substantially vertical portion following the portion, which extends to the vicinity of the outer periphery of the recessed drum 21. A guide 20 is provided so that a vertical passage 19 having a spacing slightly larger than the diameter of the filter plug 1 is defined between the guides 20 and the vertical portion of the guide 16.

A recessed drum 21 is provided below the vertical passage 19 so that the filter plugs 1 which are dispensed from the vertical passage 19 are successively received in recesses 22 and fed in a direction of an arrow 23.

The operation of the apparatus of the present invention will be described.

The filter plugs 1 contained in the magazine 2 fall in a downward direction by the effect of gravity and are successively moved into the small chamber 3. Since the roller 8 is rotated in a direction of the arrow 9, the filter plugs between the roller 8 and plate 7 are accelerated in a downward direction. The filter plugs between the roller 8 and the plate 5 are lifted in an upward direction. This causes the filter plugs 1 in the small chamber 3 to initiate to rotate around the roller 9 in a clockwise direction.

Since the endless belt 10 is driven in the direction of the arrow 15 by means of the drive roller 11, the lowermost filter plugs 1 in the small chamber 3 are fed towards the entrance of the horizontal passage 17 and then transported in a line manner to the exit of the arcuate passage 18 along the horizontal passage 17. As descirbed above, since the roller 9 causes a clockwise rotation of the filter plugs 1 in the small chamber 3, a line of the closely disposed filter plugs is readily formed on the endless belt 10. Since the filter plugs which have not moved into the horizontal passage 17 will be readily moved in an upward direction due to the clockwise rotation of the filter plugs, the excessive filter plugs 1 are not pressed each other at the entrance of the horizontal passage 17 so that the entrance of the horizontal passage is prevented from being clogged.

The filter plugs 1 which have been transported to the upper portion of the vertical passage 19 are accelerated by the gravity in the vertical passage 19. The spacings among the filter plugs 1 are gradually increased in the course of the falling in the vertical line 19. Each of the filter plugs 1 from the vertical passage 19 is moved into the recess 22 of the recessed drum 21 and is transported in a direction of an arrow 23 while it is retained in the recess by a sucking force which is applied via a hole (not shown) in the bottom of the recess 22.

While the filter plug 1 in the recess 22 of the drum 21 is transported in a direction of the arrow 23, a subsequent filter plug 1 reaches at the outer periphery 24 of the recessed drum 22 and rolls thereon until subsequent recess 22 reaches a position immediately below the vertical passage 19. In order to enable the filter plug 1 to wait under such condition, it is necessary that the filter plugs 1 are separated each other at the exit of the vertical passage 19 as described above. It is readily understood that the filter plugs 1 would be pressed to be deformed at the exit of the vertical passage 19 so that they would clog the exit thereof if the vertical passage entends to the exit of the vertical passage 19.

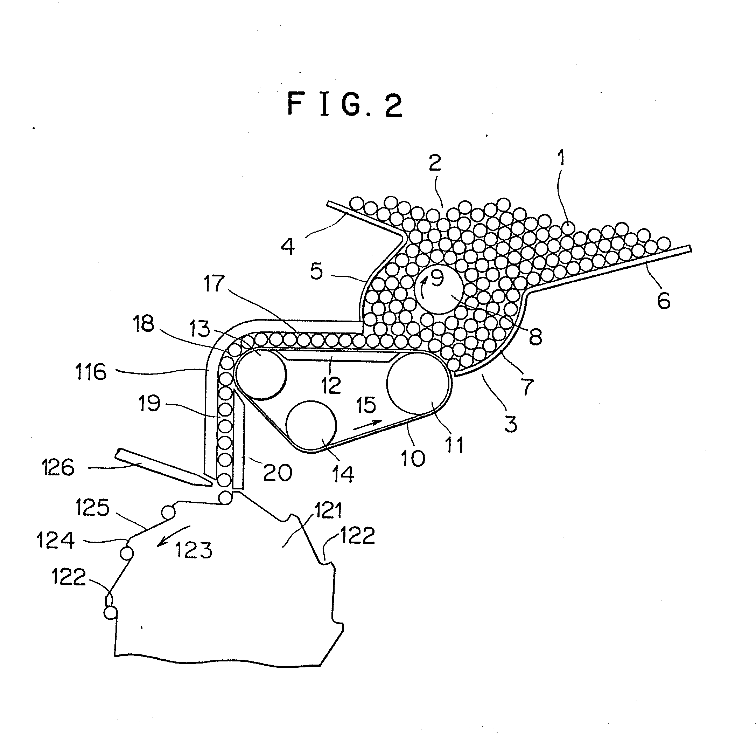

Fig. 2 is an explanatory view showing another embodiment of an apparatus of the present invention. The parts identical with those in Fig. 1 are designated by like numerals while the changed parts, but corresponding to those in Fig. 1 are designated by numbers which are added by 100. Since the structure and the operation until the arcuate passage 18 in the apparatus of Fig. 1 are identical
with those in Fig. 1, description of them are omitted.
In this embodiment, the vertical part of the guide 116 is
made shorter at the lower end thereof. An air nozzle 126
is disposed in a proximate of the outer periphery of the
recessed drum 121.

The recessed drum 121 has on the outer periphery 124
inclined surfaces 125, each of them being substantially
linearly descended toward an rearward direction.

In this apparatus, in which the filter plug 1 which
has moved into the recess 122 of the recessed drum 121
is transported in an direction of the arrow 123, the
subsequent filter plug 1 is gradually descended along the
inclined surface 125 until it is moved into the subsequent
recess 122. As the filter plug 1 is moved down along the
inclined surface 125, the spacing between the filter plug 1
and the guide 116 is enlarged so that it becomes easier
for the filter plug 1 to pass below the guide 116.
Accordingly an air nozzle 126 is provided at the lower
end of the guide 111 so that an compressed air is blown
thereon for biasing the filter plug 1 in a rearward
direction.

In the embodiment of Fig. 2 the apparatus can accomplish the faster feeding than that in the embodiment of
Fig. 1.

What is claimed is:

1.   A bar-like article feeding method in which bar-like
articles are taken out from a container in a continuous
line flow and then successively fed into recesses of a
recessed rotary drum, the improvement comprising

(a) providing a vertical passage continuous to a feeding passage;

(b) successively feeding the bar-like articles along
said feeding passage in such a manner that the bar-like
articles are in contact with each other; and

(c) causing the bar-like articles to reach the recessed
rotary drum, said bar-like articles being separated each
other by gravity-dropping the bar-like articles along said
vertical passage.

2.   A bar-like article feeding apparatus in which bar-like
articles are taken out from a container in a continuous
line flow and then successively fed into recesses of a
recessed rotary drum, the improvement comprising

(a) an endless belt which is disposed at the bottom of
the container which contains bar-like articles;

(b) a substantially horizontal feeding passage which is
formed by and between said endless belt and a guide thereabove; and

(c) a vertical dropping passage which is continuous
to said horizontal passage via an arcuate passage and extends
to the recessed rotary drum.

3.   A bar-like article feeding apparatus in which bar-like
articles are taken out from a container in a continuous
line flow and then successively fed into recesses of a

0152356

recessed rotary drum, the improvement comprising

(a) an endless belt which is disposed at the bottom of the container which contains bar-like articles;

(b) a substantially horizontal feeding passage which is formed by and between said endless belt and a guide thereabove;

(c) a vertical dropping passage which is continuous to said horizontal passage via an arcuate passage and extends to the recessed rotary drum;

(d) an air nozzle which is disposed in close proximity with the outer periphery of the recessed drum at the lower end of the vertical dropping passage; and

(e) inclined surface on the outer periphery between the recesses of the recessed rotary drum, said inclined surfaces being linearly inclined towards a rear recess.

F I G . 1

FIG.2